# EUROPÄISCHE PATENTSCHRIFT

(11) **EP 2 523 427 B1**
(45) Veröffentlichungstag und Bekanntmachung des Hinweises auf die Patenterteilung: **01.02.2017**
(21) Anmeldenummer: 12002370.0
(22) Anmeldetag: 30.03.2012
(51) Int. Cl.: H04M 1/04, H02J 7/00, H02G 3/14

(54) **ELEKTRISCHES INSTALLATIONSGERÄT MIT LADEGERÄT UND ABLAGEMÖGLICHKEIT FÜR EIN MOBILES AUDIO- UND KOMMUNIKATIONSGERÄT**
ELECTRICAL INSTALLATION DEVICE WITH CHARGER AND STORAGE OPTION FOR A MOBILE AUDIO AND COMMUNICATION DEVICE
APPAREIL D'INSTALLATION ÉLECTRIQUE DOTÉ D'UN APPAREIL DE CHARGEMENT ET D'UNE POSSIBILITÉ DE DÉPÔT D'UN APPAREIL AUDIO ET DE COMMUNICATION MOBILE

(30) Priorität: 13.05.2011 DE 102011101414
(43) Veröffentlichungstag der Anmeldung: 14.11.2012
(73) Patentinhaber: ABB AG, 68309 Mannheim (DE)
(72) Erfinder: Diehl, Sven, 57078 Siegen (DE); Ewers, Manfred, 58239 Schwerte (DE); Schulte-Lippern, Günter, 58513 Lüdenscheid (DE)

(56) Entgegenhaltungen:
- DE-A1-102009 021 449
- DE-U1-202008 006 884
- US-A1- 2010 081 473

## Beschreibung

Die Erfindung betrifft ein elektrisches Installationsgerät mit Ladegerät und Ablagemöglichkeit für ein mobiles Audio- und Kommunikationsgerät, wobei eine mit einem Gerätesockel verbindbare Zentralscheibe mit einer Frontblende vorgesehen ist, an welche ein schwenkbares Ablagebord über ein Scharniergelenk befestigt ist, wobei das Ablagebord eine Ablagefläche für das mobile Audio- und Kommunikationsgerät sowie an seiner anderen Hauptfläche eine in hochgeklappter Position vertikal gerichtete Ablagebord-Rückseite aufweist.

Aus der DE 10 2009 021 449 A1 ist ein elektrisches Installationsgerät mit einem in Form eines Unterputz-Gerätes ausgebildeten und in eine handelsübliche Unterputzdose montierbaren Gerätesockel bekannt, welcher ein Ladegerät und einen elektrischen Anschluss für ein Wechselspannungsnetz aufweist, wobei frontseitig des Gerätesockels ein Ladeanschlussstecker für den Anschluss eines Mobiltelefons und ein Universalhalter für die Ablage/Halterung dieses Mobiltelefons vorgesehen ist. Der Universalhalter dieser Ladestation ist in Form einer um ungefähr 90° nach unten zu öffnenden, über ein unteres Scharniergelenk an einer Zentralscheibe respektive am Gerätesockel befestigten Klappe ausgebildet, welche eine Auflagefläche zur Ablage des Mobiltelefons bildet. Mit der Klappe ist mindestens eine seitliche, um ungefähr 180° schwenkbare Klappe über ein Scharniergelenk verbunden, um derart eine vergrößerte Auflagefläche zur Ablage des Mobiltelefons zu schaffen.

Der Erfindung liegt die Aufgabe zugrunde, ein optimiertes elektrisches Installationsgerät mit Ladegerät und Ablagemöglichkeit für ein mobiles Audio- und Kommunikationsgerät anzugeben.

Diese Aufgabe wird in Verbindung mit den Merkmalen des Oberbegriffes des Anspruchs 1 erfindungsgemäß dadurch gelöst, dass ein Display in der Ablagebord-Rückseite integriert ist, dessen Energieversorgung über ein verdecktes Kabel erfolgt, welches vom Ladegerät im Gerätesockel über das Scharniergelenk zum schwenkbaren Ablagebord verläuft und dass sich in hochgeklappter Position ein Abstand zwischen Frontblende und Ablagebord einstellt, welcher zumindest der Stärke/Höhe eines mobilen Audio- und Kommunikationsgerätes entspricht.

Die mit der Erfindung erzielbaren Vorteile bestehen insbesondere darin, dass zwei unterschiedliche Funktionen in einem einzigen elektrischen Installationsgerät realisiert sind, zum Einen die Funktion "Laden eines mobilen Audio- und Kommunikationsgerätes" und zum Anderen die Funktion "Anzeigen interessierender Daten mittels eines Displays", wobei diese Anzeige in unterschiedlicher Form realisierbar ist, entweder in Form eines Kommunikations-Displays für das mobile Audio- und Kommunikationsgerät oder in Form eines informativen Wetterdaten/Uhrzeit-Displays oder in Form einer Anzeige für eine Wohnungsstation eines Haus-Kommunikationssystems.

Des Weiteren wird eine formschöne Integration der zum Ablegen und elektrischen Aufladen eines mobilen Audio- und Kommunikationsgerätes dienenden Zentralscheibe in ein Installationsgeräte-Programm ermöglicht. Das vorgeschlagene elektrische/elektronische Installationsgerät kann bezüglich des erforderlichen Abdeckrahmens in Einfach-Kombination oder in Mehrfach-Kombination (z. B. 2fach-Kombination, 3fach-Kombination, 4fach-Kombination) zusammen mit Schaltern, Dimmern, Steckdosen usw. eingesetzt werden. Derartige Installationsgeräte-Programme sind in vielfältiger Art mit unterschiedlichem Design, unterschiedlicher Farbgebung und unter Einsatz unterschiedlicher Materialien (z. B. Kunststoff, Edelstahl) verfügbar. Auf die vorgeschlagene Weise wird das vorgeschlagene elektrische/elektronische Unterputz-Installationsgerät harmonisch in ein Unterputz-Programm integriert und stellt keinen "Fremdkörper" im Hinblick auf Steckdosen, Schalter, Dimmer, Tastsensoren, EIB/KONNEX-Geräte der Hauskommunikation, Bewegungsmelder usw. dar.

Selbstverständlich ist es zur Realisierung einer Einzelgeräte-Lösung auch möglich, die Zentralscheibe selbst mit einem (festen) Abdeckrahmen auszurüsten.

Zweckmäßige Weiterbildungen der Erfindung sind in den Unteransprüchen gekennzeichnet.

Die Erfindung wird nachstehend an Hand der in der Zeichnung dargestellten Ausführungsbeispiele näher erläutert. Es zeigen:
- Fig. 1: eine perspektivische Sicht auf eine mit einem Abdeckrahmen komplettierte Zentralscheibe eines elektrischen Installationsgerätes zum Ablegen und elektrischen Aufladen eines mobilen Audio- und Kommunikationsgerätes,
- Fig. 2: eine Seitenansicht einer mit Abdeckrahmen komplettierten Zentralscheibe in aufgeklappter Position und abgelegtem mobilen Audio- und Kommunikationsgerät,
- Fig. 3, 4: Ansichten auf die Frontseite einer mit Abdeckrahmen komplettierten Zentralscheibe mit abgelegtem mobilen Audio- und Kommunikationsgerät bei mit unterschiedlichen Winkeln aufgeklappten Positionen,
- Fig. 5, 6: Seitenansichten in zugeklappter Position ohne/mit abgelegtem mobilen Audio- und Kommunikationsgerät,
- Fig. 7 - 9: Ansichten auf die Frontseite einer Zentralscheibe in zugeklappter Position mit unterschiedlichen Displays,
- Fig. 10: eine elektrische Schaltskizze zur Ausführungsform gemäß Fig. 8,
- Fig. 11: eine elektrische Schaltskizze zur Ausführungsform gemäß Fig. 9.

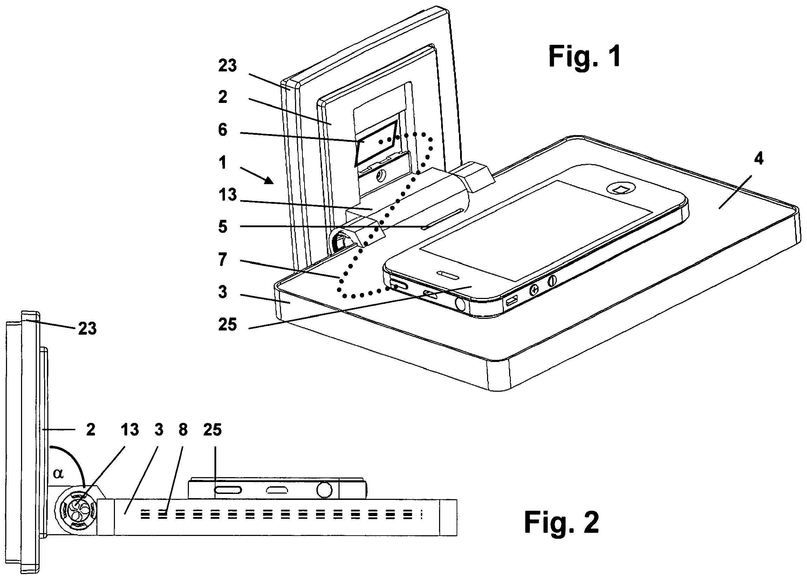

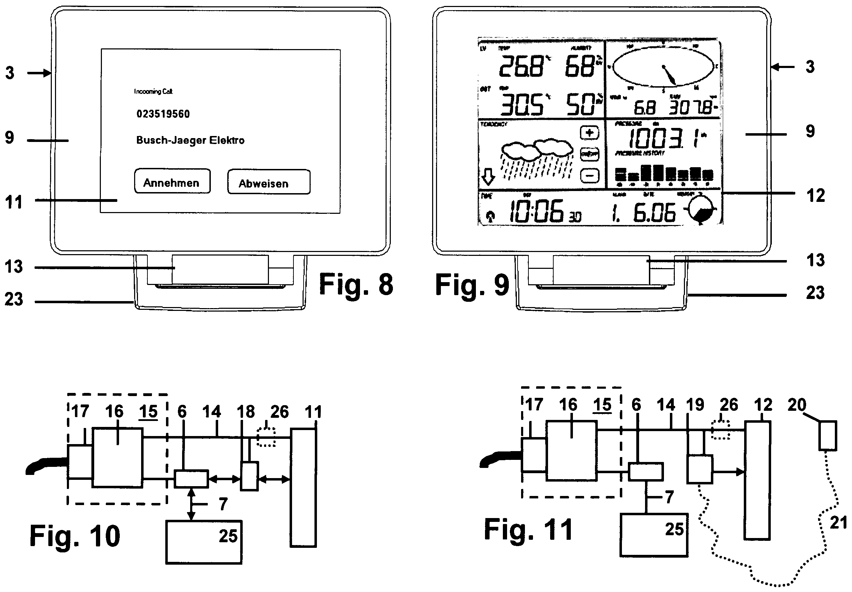

In Fig. 1 ist eine perspektivische Sicht auf eine mit einem Abdeckrahmen komplettierte Zentralscheibe eines elektrischen Installationsgerätes zum Ablegen und elektrischen Aufladen eines mobilen Audio- und Kommunikationsgerätes dargestellt. Die Zentralscheibe 1 setzt sich aus einer Frontblende 2 und einem daran befestigten schwenkbarem Ablagebord 3 zusammen. Die Frontblende 2 wird vom Abdeckrahmen 23 umrahmt und ist im montierten Zustand an einem (nicht gezeigten) in einer normgerechte Unterputz-Gerätedose installierbarem Gerätesockel des elektrischen Installationsgerätes befestigt, welcher ein Ladegerät und einen elektrischen Anschluss für ein Wechselspannungsnetz aufweist - siehe hierzu auch die Figuren 10 und 11.

Das Ablagebord 3 ist über ein Scharniergelenk 13 an der Frontblende 2 befestigt. Dabei ist ein Schwenkwinkel des Ablagebords 3 gegenüber der Frontblende 2 von mindestens 90° möglich. In aufgeklappter Position kann ein mobiles Audio- und Kommunikationsgerät 25 auf eine Ablagefläche 4 des Ablagebords abgelegt werden. Vorzugsweise ist diese Ablagefläche 4 mit einem adhäsiven Material belegt. Eine Aufladung des Akkumulators des mobilen Audio- und Kommunikationsgerätes 25 kann beispielsweise durch Einstecken eines Kabels 7 in eine elektrische Anschlussschnittstelle (beispielsweise Micro-USB-Standard-Schnittstelle) des mobilen Audio- und Kommunikationsgerätes 25 erfolgen, wobei das weitere Ende des Kabels 7 entweder in eine in der Frontblende 2 vorgesehene elektrische Anschlussschnittstelle 6 eingesteckt ist oder ohne weitere Steckvorrichtung fest mit der Zentralscheibe 1 oder dem Gerätesockel verbunden ist. Dabei kann beispielsweise zusätzlich/alternativ eine elektrische Anschlussschnittstelle 5 in die Ablagefläche 4 integriert sein.

In Fig. 2 ist eine Seitenansicht einer mit Abdeckrahmen komplettierten Zentralscheibe in aufgeklappter Position und abgelegtem mobilen Audio- und Kommunikationsgerät dargestellt. Der Winkel zwischen Ablagebord 3 und Frontblende 2 ist mit α bezeichnet und beträgt beim gezeigten Beispiel 90°. Dabei ist eine weitere Möglichkeit der Aufladung des Akkumulators des mobilen Audio- und Kommunikationsgerätes 25 mittels induktiver Energieübertragung skizziert, wozu eine Primär-Ladespule 8 im schwenkbaren Ablagebord 3 integriert ist. Das mobile Audio- und Kommunikationsgerätes 25 ist mit der erforderlichen Sekundär-Ladespule versehen, entweder durch Integration dieser Sekundär-Ladespule im Gerät selbst oder durch Anschluss eines Adapters mit einer Sekundär-Ladespule am Gerät. Die Energieversorgung der Primär-Ladespule 8 erfolgt über eine innerhalb des Scharniergelenks 13 vom Ablagebord 3 zur Frontblende 2 und zum Gerätesockel geführtes Kabel - siehe Kabel 14 gemäß den Figuren 10 und 11.

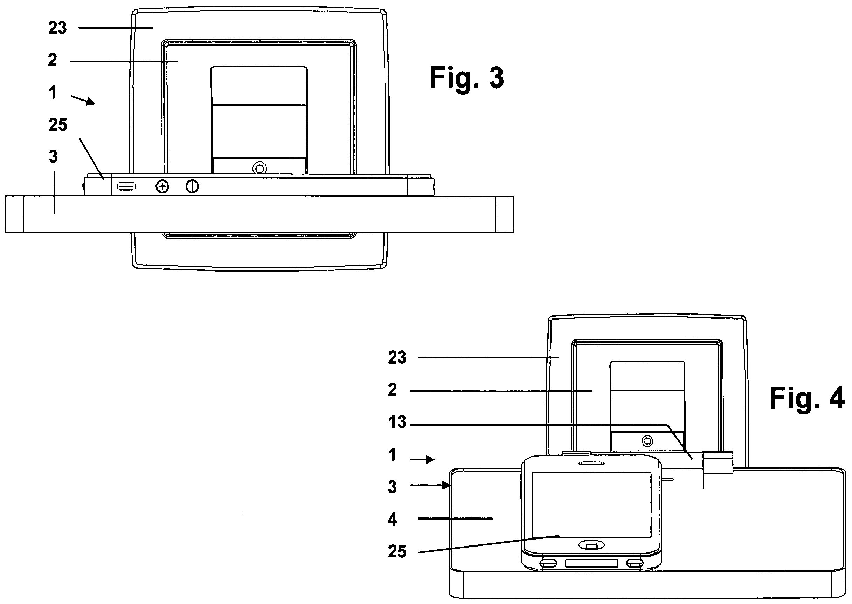

In den Figuren 3 und 4 sind Ansichten auf die Frontseite einer mit Abdeckrahmen komplettierten Zentralscheibe mit abgelegtem mobilen Audio- und Kommunikationsgerät bei mit unterschiedlichen Winkeln aufgeklappten Positionen dargestellt. Während bei der Abbildung gemäß Fig. 3 mittels des Scharniergelenks 13 ein Winkel von 90° zwischen Ablagebord 3 und Frontblende 2 der Zentralscheibe 1 eingestellt ist, beträgt dieser Winkel bei der Abbildung gemäß Fig. 4 ungefähr 135°, d. h. das Ablagebord ist quasi "nach vorne gekippt", was den Vorteil hat, dass das Display des auf die Ablagefläche 4 gelegten mobilen Audio- und Kommunikationsgerätes 25 vom Benutzer gut eingesehen werden kann. Die Ablagefläche 4 ist vorzugsweise derart groß bemessen, dass mindestens zwei mobile Audio- und Kommunikationsgeräte 25 nebeneinander abgelegt werden können.

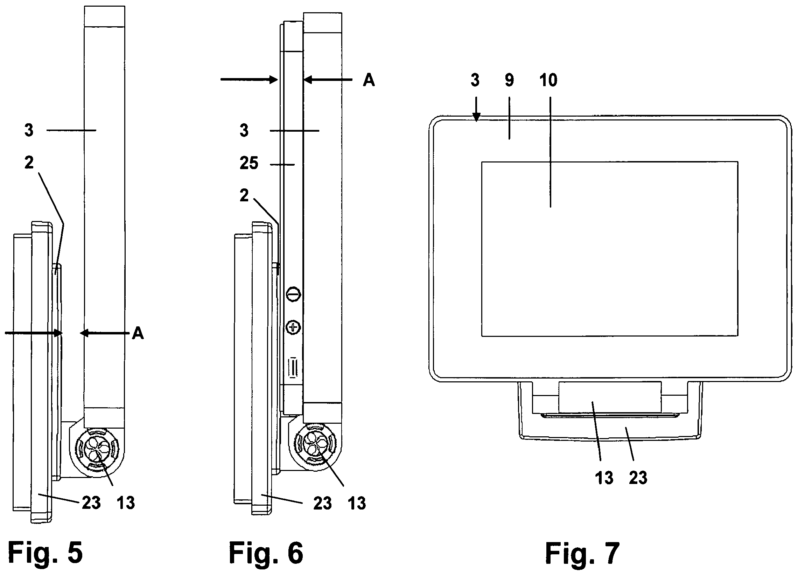

In den Figuren 5 und 6 sind Seitenansichten in zugeklappter Position ohne/mit abgelegtem mobilen Audio- und Kommunikationsgerät dargestellt. In Fig. 5 ist der Abstand A zwischen Frontblende 2 und Ablagebord 3 angegeben. Dieser Abstand A entspricht zumindest der Stärke/Höhe eines üblichen mobilen Audio- und Kommunikationsgerätes 25, so dass es möglich ist, das Ablagebord 3 mit dem darauf abgelegten mobilen Audio- und Kommunikationsgerät 25 zusammenzuklappen respektive hochzuklappen, wodurch das mobile Audio- und Kommunikationsgerät 25 quasi zwischen Frontblende 2 und Ablagebord "eingeklemmt" wird, wie dies in Fig. 6 gezeigt ist.

In den Figuren 7, 8 und 9 sind Ansichten auf die Frontseite einer Zentralscheibe in zugeklappter - gleichbedeutend mit hochgeklappter respektive zusammengeklappter Position - mit unterschiedlichen Displays dargestellt. In Fig. 7 ist zunächst ganz allgemein gezeigt, dass ein Display 10 in die Ablagebord-Rückseite 9 des Ablagebords 3 integriert ist. Dieses Display 10 kann auch in Form eines Touchscreens ausgebildet sein. Das Ablagebord 3 kann mit seitlichen Auslässen für SD-Karten (inklusive Karten-Lesegerät) oder ähnliche Speicherkarten und/oder mit einer USB-Schnittstelle und/oder mit Anschlüssen A/V (Audio/Video) In/Out (Eingang/Ausgang) für DVD-Videos oder Konsolenspiele versehen sein.

Des Weiteren kann das vorgeschlagene elektrische Installationsgerät mit Display 10 auch die Funktion einer Wohnungsstation eines Haus-Kommunikationssystems ausüben. Hierzu ist das Display 10 vorzugsweise als Touchscreen ausgebildet, in welchem zur Anzeige gebracht werden können:
- ein von einer Kamera einer Türstation erzeugtes Kamerabild,
- ein Aktivierungsknopf, der vom Benutzer beaufschlagt wird, falls er Spracheingaben vornehmen möchte (Kommunikation mit einem an der Türstation wartenden Besucher),
- ein Betätigungsknopf zur Aktivierung des Türöffners der Türstation.

Im Ablagebord 3 sind ein Mikrofon und ein Lautsprecher für die bidirektionale Kommunikation zwischen der Wohnungsstation und der Türstation vorgesehen sowie ein Tonerzeuger zur Erzeugung eines Klingeltons. Der Gerätesockel enthält eine Steuer-/Verarbeitungseinheit inklusive Speichereinheit für die Kommunikation mit weiteren Stationen des Haus-Kommunikationssystems und zur Abspeicherung von wesentlichen Inbetriebnahme- und Parametrierungs-Daten.

In Fig.7 ist zusätzlich - wie auch in den weiteren Figuren 5, 6, 8 und 9 - das Scharniergelenk 13 und der Abdeckrahmen 23 bezeichnet.

in Fig. 8 ist gezeigt, dass das Display 10 in Form eines in der Ablagebord-Rückseite 9 des Ablagebords 3 integrierten Kommunikations-Displays 11 für das "eingeklemmte" mobile Audio- und Kommunikationsgerät 25 ausgeführt sein kann, siehe hierzu auch Fig. 6. Das Kommunikations-Displays 11 oder allgemein das Ablagebord 3 beinhaltet ein integriertes Mikrofon und einen integrierten Lautsprecher. Bei dieser Ausführungsform ist vor dem Zusammenklappen der Zentralscheibe 1 respektive dem Hochklappen des Ablagebords 3 gegebenenfalls zunächst eine elektrische Verbindung zwischen dem abgelegten mobilen Audio- und Kommunikationsgerät 25 und der Zentralscheibe 1 respektive dem Gerätesockel durch Einstecken des Kabels 7 herzustellen. Nach erfolgtem Hochklappen des Ablagebords 3 kann eine Kommunikation zwischen dem Benutzer und dem mobilen Audio- und Kommunikationsgerät 25 über das Kommunikations-Display 11 erfolgen, während gleichzeitig die Aufladung des Akkumulators des Geräts 25 erfolgt. Geht beispielsweise ein Anruf ein, so wird dies auf dem Kommunikations-Display 11 zur Anzeige gebracht und der Benutzer kann durch entsprechende Beaufschlagung von bezeichneten Flächen des Displays 11 entscheiden, ob er den Anruf annehmen oder abweisen möchte. Nimmt der Benutzer den Anruf an, ist eine Kommunikation via integriertem Mikrofon / integriertem Lautsprecher möglich.

In Fig. 9 ist gezeigt, dass dieses Display 10 in Form eines in der Ablagebord-Rückseite 9 des Ablagebords 3 integrierten Wetterdaten/Uhrzeit-Displays 12 ausgeführt sein kann. Dieses Display 12 zeigt die aktuelle Uhrzeit, die aktuelle Temperatur und die relative Luftfeuchtigkeit im Innenraum, die aktuelle Außentemperatur und die relative Außen-Luftfeuchtigkeit, den aktuellen Luftdruck sowie eine Wetterprognose für die kommenden Tage an sowie gegebenenfalls sonstige Daten zur Schaffung einer Wetterstation. Gleichzeitig kann die Aufladung des Akkumulators eines abgelegten mobilen Audio- und Kommunikationsgerätes 25 erfolgen.

Das Display kann auch als Bedienelement eines WLAN Radios dienen, welches mittels eines WLAN Netzwerks inklusive eines WLAN Routers betrieben wird. Weitere Applikationen des Displays bestehen im Zusammenhang mit UPNP, wobei das Display als Bedienelement zur Ansteuerung von Geräten wie Stereoanlagen, Router, Drucker, Haussteuerung eingesetzt werden kann.

In Fig. 10 ist eine elektrische Schaltskizze zur Ausführungsform gemäß Fig. 8 dargestellt. Es ist ein Gerätesockel 15 mit darin integriertem Ladegerät 16 inklusive Anschluss 17 für ein 230V-Wechselspannungsnetz skizziert, wobei dieses Ladegerät 16
- über die Anschlussschnittstelle 6 und das Kabel 7 den Akkumulator des mobilen Audio- und Kommunikationsgerätes 25 auflädt,
- das Display 11 mit elektrischer Energie speist,
- eine Elektronikeinheit 18 mit Energie speist.

Dabei verläuft ein verdecktes Kabel 14 vom Ladegerät 16 des Gerätesockels 15 und das Scharniergelenk 13 zum schwenkbaren Ablagebord 3. Die Elektronikeinheit 18 kommuniziert einerseits über die Anschlussschnittstelle 6 und das Kabel 7 mit dem mobilen Audio- und Kommunikationsgerät 25 und anderseits mit dem Display 11 und ermöglicht die bidirektionale Kommunikation zwischen dem Display 11 und dem mobilen Audio- und Kommunikationsgerät 25 durch entsprechende Signalumsetzung.

Selbstverständlich ist an Stelle der Draht-Verbindung via Anschlussschnittstelle 6 und Kabel 7 auch eine Drahtlos-Verbindung zwischen der Elektronikeinheit 18 und dem mobilen Audio- und Kommunikationsgerät 25 möglich, vorzugsweise via Bluetooth, so dass in einem solchen Fall mittels der derart ausgebildeten Zentralscheibe 1 quasi eine Bluetooth-Freisprecheinrichtung für das mobile Audio- und Kommunikationsgerät 25 realisiert wird.

In Fig. 11 ist eine elektrische Schaltskizze zur Ausführungsform gemäß Fig. 9. dargestellt. Es ist ein Gerätesockel 15 mit darin integriertem Ladegerät 16 inklusive Anschluss 17 für ein 230V-Wechselspannungsnetz skizziert, wobei dieses Ladegerät 16
- über die Anschlussschnittstelle 6 und das Kabel 7 den Akkumulator des mobilen Audio- und Kommunikationsgerätes 25 auflädt,
- das Display 12 mit elektrischer Energie speist,
- eine Elektronikeinheit 19 mit Energie speist.

Dabei verläuft ein verdecktes Kabel 14 vom Ladegerät 16 des Gerätesockels 15 und das Scharniergelenk 13 zum schwenkbaren Ablagebord 3. Die Elektronikeinheit 19 beinhaltet einen Temperatursensor zur Erfassung der Innentemperatur (Raumtemperatur), ein Zeitmodul - gegebenenfalls ein Funkmodul für den Empfang eines digital kodierten Zeitübertragungs-Funksignals für Funkuhren - und einen Funkempfänger zum Empfang eines Funksignals eines Temperatur-Außenfühlers 20 über eine Funkstrecke 21. Die Elektronikeinheit 19 versorgt das Display 12 mit entsprechenden zur Anzeige zu bringenden Daten.

Um den Energieverbrauch des Displays 10/11/12 zu verringern und die Lebensdauer des Displays 10/11/12 zu erhöhen, ist vorzugsweise ein Zwischenschalter 26 zwischen der Energieversorgung und dem Display 10/11/12 vorgesehen, welcher das Display von der Energieversorgung respektive dem Ladegerät 16 abschaltet, sobald der Winkel α zwischen Frontblende 2 und Ablagebord 3 einen festegelegten Schwellwert von z. B. 10° überschreitet, d. h. das Display 10/11/12 wird beim Aufklappen der Ablagebords 3 automatisch abgeschaltet. Dieser optionale Zwischenschalter 26 ist bei den elektrischen Schaltskizzen gemäß den Figuren 10 und 11 jeweils gestrichelt eingezeichnet. Des Weiteren ist es auch möglich, zusätzlich die Energieversorgung der Elektronikeinheit 18 und/oder 19 durch diesen Zwischenschalter 26 abzuschalten.

### Bezugszeichenliste

- 1: Zentralscheibe eines elektrischen Installationsgerätes zum Ablegen und elektrischen Aufladen eines mobilen Audio- und Kommunikationsgerätes
- 2: Frontblende
- 3: schwenkbares Ablagebord
- 4: Ablagefläche
- 5: elektrische Anschlussschnittstelle
- 6: elektrische Anschlussschnittstelle
- 7: Kabel
- 8: Primär-Ladespule
- 9: Ablagebord-Rückseite
- 10: Display
- 11: Kommunikations-Display für mobiles Audio- und Kommunikationsgerät
- 12: Wetterdaten/Uhrzeit-Display
- 13: Scharniergelenk
- 14: Kabel
- 15: Gerätesockel
- 16: Ladegerät
- 17: Anschluss für Wechselspannungsnetz
- 18: Elektronikeinheit
- 19: Elektronikeinheit inklusive Temperatursensor und Zeitmodul
- 20: Temperatur-Außenfühler
- 21: Funkstrecke
- 22: -
- 23: Abdeckrahmen
- 24: -
- 25: mobiles Audio- und Kommunikationsgerät
- 26: Zwischenschalter
- A: Abstand zwischen Frontblende und Ablagebord im zugeklappten Zustand
- α: Winkel zwischen Frontblende und Ablagebord (im aufgeklappten Zustand)

## Patentansprüche

1. Elektrisches Unterputz- Installationsgerät mit Ladegerät (16) und Ablagemöglichkeit für ein mobiles Audio- und Kommunikationsgerät (25), wobei eine mit einem Gerätesockel (15) verbindbare Zentralscheibe (1) mit einer Frontblende (2) vorgesehen ist, an welche ein schwenkbares Ablagebord (3) über ein Scharniergelenk (13) befestigt ist, wobei das Ablagebord (3) eine Ablagefläche (4) für das mobile Audio- und Kommunikationsgerät (25) sowie an seiner anderen Hauptfläche eine in hochgeklappter Position vertikal gerichtete Ablagebord-Rückseite (9) aufweist, **dadurch gekennzeichnet, dass** ein Display (10, 11, 12) in der Ablagebord-Rückseite (9) integriert ist, dessen Energieversorgung über ein verdecktes Kabel (14) erfolgt, welches vom Ladegerät (16) im Gerätesockel (15) über das Scharniergelenk (13) zum schwenkbaren Ablagebord (3) verläuft und dass sich in hochgeklappter Position ein Abstand (A) zur Aufnahme eines Audio- und Kommunikationsgerätes zwischen Frontblende (2) und Ablagebord (3) einstellt.

2. Elektrisches Installationsgerät nach Anspruch 1, **dadurch gekennzeichnet, dass** das Ablagebord (3) mit dem darauf abgelegten mobilen Audio- und Kommunikationsgerät (25) zusammenklappbar respektive hochklappbar ist, wodurch das mobile Audio- und Kommunikationsgerät (25) zwischen Frontblende (2) und Ablagebord (3) eingeklemmt ist.

3. Elektrisches Installationsgerät nach Anspruch 1 oder 2, **dadurch gekennzeichnet, dass** das Display als Kommunikations-Display (11) für das mobile Audio- und Kommunikationsgerät (25) ausgebildet ist.

4. Elektrisches Installationsgerät nach Anspruch 1 oder 2, **dadurch gekennzeichnet, dass** das Display als Wetterdaten/Uhrzeit-Display (12) ausgebildet ist.

5. Elektrisches Installationsgerät nach Anspruch 1 oder 2, **dadurch gekennzeichnet, dass** das Display als Anzeige einer Wohnungsstation für ein Haus-Kommunikationssystem ausgebildet ist, welche ein von einer Kamera einer Türstation erzeugtes Kamerabild, einen Aktivierungsknopf für Spracheingaben und einen Betätigungsknopf zur Aktivierung eines Türöffners zeigt.

6. Elektrisches Installationsgerät nach einem der vorstehenden Ansprüche, **dadurch gekennzeichnet, dass** ein Mikrofon und ein Lautsprecher im Ablagebord (3) integriert sind.

7. Elektrisches Installationsgerät nach Anspruch 5, **dadurch gekennzeichnet, dass** ein Tonerzeuger zur Erzeugung eines Klingeltons im Ablagebord (3) integriert ist.

8. Elektrisches Installationsgerät nach einem der vorstehenden Ansprüche, **dadurch gekennzeichnet, dass** ein Zwischenschalter (26) zwischen dem Ladegerät (16) und dem Display (10, 11, 12) vorgesehen, welcher das Display von der Energieversorgung abschaltet, sobald der Winkel (α) zwischen Frontblende (2) und Ablagebord (3) einen festegelegten Schwellwert überschreitet.

## Claims

1. Electrical flush-mounted installation device having a charging device (16) and holding capability for a mobile audio and communication device (25), wherein a central plate (1) which can be connected to a device base (15) and has a front panel (2) is provided, a pivotable holding board (3) being fastened to the said front panel by means of a hinge joint (13), wherein the holding board (3) has a holding surface (4) for the mobile audio and communication device (25) and also a holding board rear side (9), which is directed vertically in the folded-up position, on its other main surface, **characterized in that** a display (10, 11, 12) is integrated in the holding board rear side (9), energy being supplied to the said display by means of a concealed cable (14) which runs from the charging device (16) in the device base (15), via the hinge joint (13), to the pivotable holding board (3), and **in that** a spacing (A) for accommodating an audio and communication device is created between the front panel (2) and the holding board (3) in the folded-up position.

2. Electrical installation device according to Claim 1, **characterized in that** the holding board (3), with the mobile audio and communication device (25) held on it, can be folded together or folded up, as a result of which the mobile audio and communication device (25) is clamped between the front panel (2) and the holding board (3).

3. Electrical installation device according to Claim 1 or 2, **characterized in that** the display is in the form of a communication display (11) for the mobile audio and communication device (25).

4. Electrical installation device according to Claim 1 or 2, **characterized in that** the display is in the form of a weather data/time display (12).

5. Electrical installation device according to Claim 1 or 2, **characterized in that** the display is in the form of a display means of a residence station for a house communication system, which display shows a camera image which is generated by a camera of a door station, an activation button for speech inputs and an operating button for activating a door opener.

6. Electrical installation device according to one of the preceding claims, **characterized in that** a microphone and a loudspeaker are integrated in the holding board (3).

7. Electrical installation device according to Claim 5, **characterized in that** a sound generator for generating a ring tone is integrated in the holding board (3).

8. Electrical installation device according to one of the preceding claims, **characterized in that** an intermediate switch (26) is provided between the charging device (16) and the display (10, 11, 12), which intermediate switch disconnects the display from the energy supply as soon as the angle (α) between the front panel (2) and the holding board (3) exceeds a defined threshold value.

## Revendications

1. Appareil d'installation électrique encastré comportant un appareil de charge (16) et une possibilité de rangement pour un appareil audio et de communication mobile (25), dans lequel il est prévu une plaque centrale (1) pouvant être reliée à un socle d'appareil (15) ayant un panneau avant (2) sur lequel une tablette pivotante (3) peut être fixée par l'intermédiaire d'une articulation à charnière (13), dans lequel la tablette (3) comporte une surface d'appui (4) destinée à l'appareil audio et de communication mobile (25) et sur son autre surface principale, une face arrière de tablette (9) orientée verticalement à une position relevée, **caractérisé en ce qu'**un afficheur (10, 11, 12) est intégré à la face arrière de tablette (9), dont l'alimentation en énergie est effectuée par l'intermédiaire d'un câble gainé (14) qui s'étend depuis l'appareil de charge (16), dans le socle d'appareil (15), par l'intermédiaire de l'articulation à charnière (13), jusqu'à la tablette pivotante (3), et **en ce qu'**un espacement (A) est établi en position relevée pour recevoir un appareil audio et de communication entre le panneau avant (2) et la tablette (3).

2. Appareil d'installation électrique selon la revendication 1, **caractérisé en ce que** la tablette (3) peut respectivement être relevée en pouvant être pliée en association avec l'appareil audio et de communication mobile (25) placé sur celle-ci, de sorte que l'appareil audio et de communication mobile (25) est pincé entre le panneau avant (2) et la tablette (3).

3. Appareil d'installation électrique selon la revendication 1 ou 2, **caractérisé en ce que** l'afficheur est réalisé sous la forme d'un afficheur de communication (11) destiné à l'appareil audio et de communication mobile (25).

4. Appareil d'installation électrique selon la revendication 1 ou 2, **caractérisé en ce que** l'afficheur est réalisé sous la forme d'un afficheur de données météorologiques/d'heure (12).

5. Appareil d'installation électrique selon la revendication 1 ou 2, **caractérisé en ce que** l'afficheur est réalisé sous la forme d'un affichage d'une station d'habitation destinée à un système de communication domestique, qui affiche une image de caméra générée par une caméra d'une station de porte, un bouton d'activation destiné à des entrées vocales et un bouton d'actionnement destiné à l'activation d'un système d'ouverture de prote.

6. Appareil d'installation électrique selon l'une des revendications précédentes, **caractérisé en ce qu'**un microphone et un haut-parleur sont intégrés à la tablette (3).

7. Appareil d'installation électrique selon la revendication 5, **caractérisé en ce qu'**un générateur de tonalité destiné à générer une sonnerie de téléphone est intégré à la tablette (3).

8. Appareil d'installation électrique selon l'une des revendications précédentes, **caractérisé en ce qu'**il est prévu un commutateur intermédiaire (26) entre l'appareil de charge (16) et l'afficheur (10, 11, 12), lequel commutateur intermédiaire déconnecte l'afficheur de l'alimentation en énergie lorsque l'angle (α) formé entre le panneau avant (2) et la tablette (3) dépasse une valeur de seuil fixée.
